# EUROPEAN PATENT APPLICATION

(11) **EP 1 641 249 A1**
(43) Date of publication of application: **29.03.2006**
(21) Application number: 04255878.3
(22) Date of filing: 27.09.2004
(51) Int. Cl.: H04N 5/235

(54) **Improvements in or relating to image sensors**

(71) Applicant: STMicroelectronics Limited, Marlow, Buckinghamshire SL7 1YL (GB)
(72) Inventor: Henderson, Robert, Edinburgh EH10 5HA (GB); Purcell, Matthew, Edinburgh EH11 1AX (GB); Storm, Graeme, Edinburgh EH16 5XP (GB)
(74) Representative: Cooper, John

(57) **Abstract**

A rolling blade exposure system is disclosed where odd rows of a pixel array are read out with a short exposure time and even rows are read out at a long exposure time. Each pair of sampled rows are stitched together before to form a single output line. The resultant image is then formed from the output lines. The stitching process ensures that the resultant image has a wide dynamic range. This is achieved at the expense of a loss of resolution, but this loss is acceptable for certain applications.

## Description

The present invention relates to improvements in or relating to image sensors, in particular to new rolling blade exposure techniques to extend dynamic range in CMOS image sensors.

A solid state image sensor, such as a CMOS image sensor, comprises an array of pixels. Light is incident on these pixels for an integration time, and the resulting charge is converted to a voltage before being read out. The readout process includes converting the analogue voltage to a digital value and then processing the collected digital values in order to construct an image. As pixel arrays comprise a large number of pixels, it is common to read out selected subsets of pixels, for example, a row, at a time.

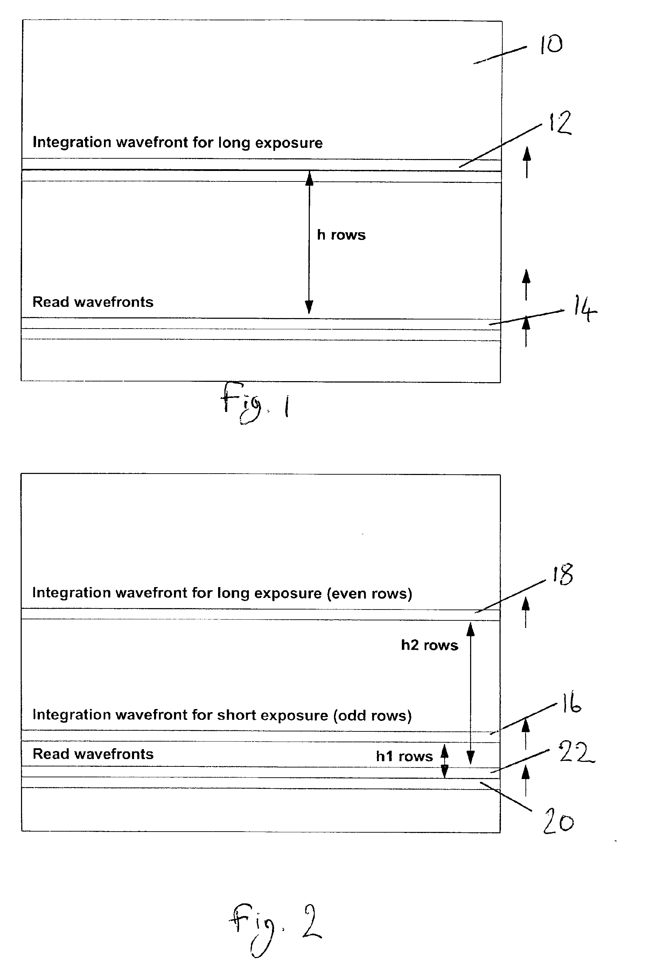

Fig. 1 shows a typical "rolling blade" exposure system implemented in a CMOS image sensor. A pixel array 10 comprises a number of rows of pixels. A first row of pixels is put into integration at time t(n-h) and is read out at time t(n) where h is a number of lines of exposure.

Integration wavefront 12 and read wavefront 14 advance at a constant line rate, dependent on the desired frame rate and number of rows in the image. A read wavefront 14 is the operation of reading all exposed pixels on a given row i at time t(n). A certain time dt is required to read the pixel row out before the next row i+1 can be read at time (t+dt). When i reaches the maximum number of lines in the image it is reset to i=O and recommences.
The integration wavefront 12 is the operation of releasing all pixels from reset, starting integration of incident light.

When the row number n increments to reach the maximum number of rows in the array, it moves back to the beginning n=0 and recommences. The wavefronts roll round the pixel array at a certain exposure spacing, hence the term "rolling blade". The exposure time h is generally adjusted as a function of the amount of light in the scene in order to maintain the mean pixel value in the centre of the output range.

Such an exposure scheme provides a linear representation of the light level in the scene, provided that the output of the pixel and readout circuitry is also linear. Typical CMOS pixels such as passive, active or pinned photodiode pixels all provide a linear conversion of input photons to output voltage.

The number of gathered photons is directly related to the length of exposure time. A linear readout chain and analogue to digital converter is usually employed to convert the pixel output voltage to digital image codes.

The intra-scene dynamic range of such an imaging system is defined as the ratio of the largest light level to the smallest light level that can be represented in a single image. Often, an image will contain very bright objects within a darker scene, a typical example being a scene outside a window viewed from within a darker room. An exposure algorithm is employed which adjusts the image mean to be some compromise between the darker and lighter areas. However, neither of these extremes can be fully represented within the code range of a linear image (typically 10-bits, or 60dB). This results in clipping of the brightest areas of an image to the maximum code level (typically 1023 in a 10-bit image). Detail in these clipped areas is lost.

A pixel with a nonlinear response can be utilised to extend the intra-scene dynamic range. Such pixels have a compressive response from light photons to output volts, often using the logarithmic response of a MOS transistor in weak inversion. However, they suffer from high fixed pattern noise (FPN) and other operational noise levels and increased system complexity for calibration purposes.

Another technique used to obtain extended dynamic range is to combine images obtained with different exposures, as disclosed for example in US 6,115,065 assigned to California Institute of Technology. Clipped areas in the longer exposure image are replaced by detail from the shorter exposure image.

However, such techniques require a frame memory which is an expensive overhead in a hardware implementation, and the images are also separated in time by a frame time, which introduces motion distortion.

It would be desirable to find a way of increasing the intra-scene dynamic range of an image sensor that would reduce or eliminate one or more of these disadvantages.

According to a first aspect of the present invention, there is provided a method of sensing an image using an image sensor which comprises a pixel array, the method comprising the steps of:
exposing a first set of pixels to radiation for a first integration time;
exposing a second set of pixels to radiation for a second integration time different from said first integration time;
obtaining a first data set from the first set of pixels;
obtaining a second data set from the second set of pixels;
combining said first and second data sets to form a single output data set; and
repeating the above steps for different first and second sets until a plurality of output data sets are obtained, representing data from every region of the pixel array.

Preferably, the method further comprises the step of exposing at least one further set of pixels to radiation for a further integration time different from said first, second and any other further integration times;
obtaining a further data set from each further set of pixels;
combining said first, second and further data sets to form a single output data set, and
repeating the above steps for different first, second and further sets until a plurality of output data sets has been collected, representing data obtained from every region of the pixel array.

Preferably, the steps of exposing each set of pixels to radiation are carried out at least partially simultaneously.

Preferably, the pixel array comprises one group of pixels dedicated for use as each of the sets of pixels.

Preferably, the groups are interleaved.

Preferably, each set of pixels comprises a row of the pixel array.

Preferably, each set of pixels comprises a subset of a row of the pixel array.

Preferably, the subset comprises every other pixel in the row.

Preferably, each set of pixels comprises two rows of the array.

Preferably, the greater of the first and second integration times is an integer multiple of the lesser of the first and second integration times.

Preferably, the lesser of the first and second integration times is a fraction of the time taken to read out one row of pixels.

Preferably, the step of combining the data sets to form a single output data set comprises stitching the data sets together to ameliorate the dynamic range of the output data set when compared to any one of the other data sets.

Preferably, the output data set and each other data set are all the same size.

According to a second aspect of the invention, there is provided an image sensor comprising a pixel array and control circuitry adapted to carry out the method of the first aspect.

From a third aspect, a CMOS image sensor according to the second aspect is provided. From a fourth aspect, a digital camera comprising an image sensor comprising a pixel array and control circuitry adapted to carry out the method of any of the first aspect is provided, and in further aspects, a mobile telephone or a webcam comprising the digital camera can be provided.

The present invention will now be described, by way of example only, with reference to the accompanying drawings, in which:
Fig. 1 shows a prior art rolling blade exposure system;
Fig. 2 shows a rolling blade exposure system according to a first embodiment of the invention;
Fig. 3 shows a stitching process for combining data obtained from short and long exposure times according to the system shown in Fig. 2; and
Fig. 4 shows a rolling blade exposure system according to a second embodiment of the invention.

The scheme shown in Fig. 2 is a means of obtaining extended dynamic range from an image at the expense of lower spatial resolution. A first integration wavefront 16 and a second integration wavefront 18 operate in a rolling blade fashion. Odd lines of the image have a first exposure h1, i.e. there are h1 rows between the first integration wavefront 16 and its corresponding read wavefront 20 and even lines have a second exposure h2, i.e. there are h2 rows between the second integration wavefront 18 and its corresponding read wavefront 22. One exposure (here, h1) is shorter than the other. The ratio between the long and short exposure can be fixed, i.e. h2=khl.

This illustrated embodiment can also make use of the concept of fine exposure, whereby the short exposure h1 can be adjusted as a fraction of a line time rather than in integer multiples. Thus the integration wavefront occurs within the previous line being read out. The integration point can be adjusted by single clock periods. A large ratio is then possible between minimum fine exposure and maximum exposure. This can be one clock period to the number of clocks in a full image (easily as much as 1:1,000,000). This imposes an upper limit for the factor k which can be used to extend the image dynamic range.

The short and long exposure images are read out consecutively from odd and even rows. The short exposure must be kept in a line memory for a line time before being stitched together with the next long exposure line to produce a single output line.

Instead of taking two pictures, each of which has a different exposure time, and then stitching those pictures together, the present invention just takes one picture, in which each line is stitched to maximise dynamic range. This means that no extra frame memory is required, and also eliminates the distortion that would come from taking two separate pictures at different times.

When compared to a standard optical rolling blade, there is a loss of 1/2 vertical resolution involved in this process. However, this may be acceptable in some situations. For example, the scheme could be implemented when a camera is in a viewfinder mode where image accuracy is not as important, or for an application where a high resolution is not critical, such as a live video display on a small screen in a high resolution imager.

In another embodiment of the invention, only a selection of pixels from each row are selected, either by subsampling or decimation. For example, every second pixel could be selected from each row. This is done in order to maintain the aspect ratio, but results in a resolution which is 1/4 of that obtained with the standard technique of Fig. 1. However, as discussed above, there are some situations where such a low resolution is acceptable.

In a further embodiment, the invention is applied to a Bayer colour image. The long and short exposures are applied to line pairs rather than single lines in order to preserve colour sampling properties.

The embodiment illustrated in Fig. 2 comprises two integration and read wavefronts. However, further integration and read wavefronts could be provided. This would further reduce resolution as compared to having two integration and read wavefronts, but the increased dynamic range would be desireable in some situations and pixel arrays.

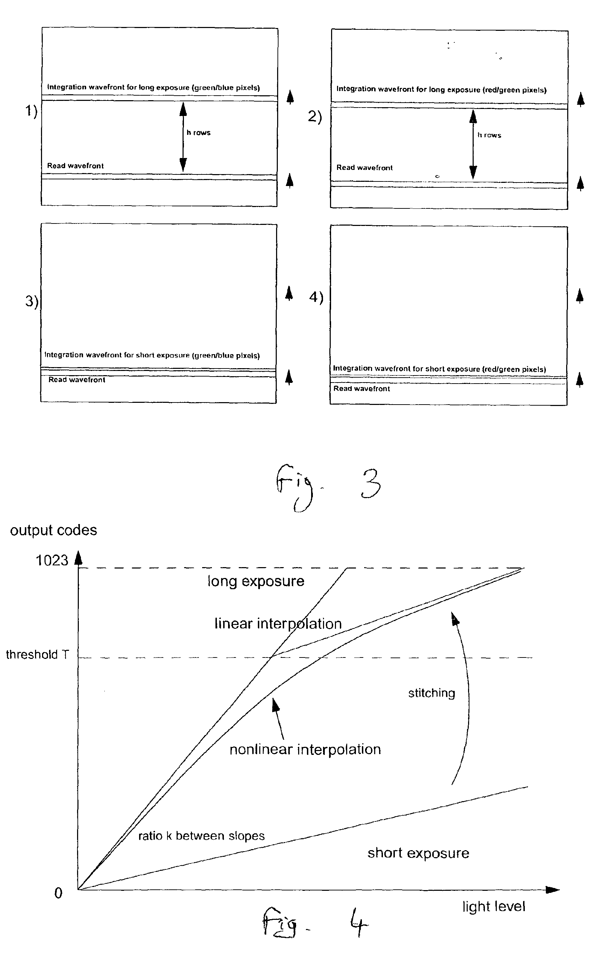

Yet a further embodiment of the invention is shown in Fig. 3. This method does not compromise resolution but reduces the maximum frame rate by half. Firstly, a row of green/blue pixels is read out at long exposure (Fig. 3(1)). Next, the same green/blue row is put back into integration at a fine exposure level while the row of red/green pixels is being read (Fig. 3(2)).

The fine exposed row of green/blue pixels is read out while the row of red/green pixels is put back into integration (Fig. 3(3)), and finally the fine exposed row of red/green pixels is read out (Fig. 3(4)). This process is repeated for the next colour line pair, until the whole array has been processed. The long exposure data is stored in a line memory before stitching with the short exposure data. This scheme works where the short exposure is constrained to be less than a line time.

Fig. 4 illustrates a stitching process, which is applicable to any of the above embodiments. The stitching process may be a simple algorithm of the following type: if (long exposure pixel (i) > threshold T) then output(i)= (short exposure pixel(i)-T/k+T). Other more sophisticated calculations may be employed to smooth the transition from short to long exposure areas of the scene. Note that if neither short or long exposure line is saturated then the information from the short exposure may be used in order not to decrease resolution.

Improvements and modifications may be made to the above without departing from the scope of the present invention.

It will also be appreciated that the image sensor of the present invention can be incorporated into a number of different products, including but not limited to a digital camera, an optical mouse, mobile telephone or webcam incorporating the digital camera, or other more specialised imagers used in diverse fields. The man skilled in the art will appreciate that the practical matter of implementing the invention in any of these or other devices is straightforward, and thus will not be described herein in more detail.

## Claims

1. A method of sensing an image using an image sensor which comprises a pixel array, the method comprising the steps of:
exposing a first set of pixels to radiation for a first integration time;
exposing a second set of pixels to radiation for a second integration time different from said first integration time;
obtaining a first data set from the first set of pixels;
obtaining a second data set from the second set of pixels;
combining said first and second data sets to form a single output data set; and
repeating the above steps for different first and second sets until a plurality of output data sets are obtained, representing data from every region of the pixel array.

2. The method of claim 1, further comprising the step of exposing at least one further set of pixels to radiation for a further integration time different from said first, second and any other further integration times;
obtaining a further data set from each further set of pixels;
combining said first, second and further data sets to form a single output data set, and
repeating the above steps for different first, second and further sets until a plurality of output data sets has been collected, representing data obtained from every region of the pixel array.

3. The method of claim 1 or claim 2, wherein the steps of exposing each set of pixels to radiation are carried out at least partially simultaneously.

4. The method of any preceding claim wherein the pixel array comprises one group of pixels dedicated for use as each of the sets of pixels.

5. The method of claim 4, wherein the groups are interleaved.

6. The method of any preceding claim, wherein each set of pixels comprises a row of the pixel array.

7. The method of any preceding claim, wherein each set of pixels comprises a subset of a row of the pixel array.

8. The method of claim 6 or claim 7, wherein the subset comprises every other pixel in the row.

9. The method of any of claims 1-5, wherein each set of pixels comprises two rows of the array.

10. The method of any preceding claim, wherein the greater of the first and second integration times is an integer multiple of the lesser of the first and second integration times.

11. The method of any preceding claim, wherein the lesser of the first and second integration times is a fraction of the time taken to read out one row of pixels.

12. The method of any preceding claim, wherein the step of combining the data sets to form a single output data set comprises stitching the data sets together to ameliorate the dynamic range of the output data set when compared to any one of the other data sets.

13. The method of any preceding claim, wherein the output data set and each other data set are all the same size.

14. An image sensor comprising a pixel array and control circuitry adapted to carry out the method of any of claims 1-13.

15. A CMOS image sensor according to claim 14.

16. A digital camera comprising an image sensor comprising a pixel array and control circuitry adapted to carry out the method of any of claims 1-13.

17. A mobile telephone comprising the digital camera of claim 16.

18. A webcam comprising the digital camera of claim 16.
